# EUROPÄISCHE PATENTANMELDUNG

(11) **EP 1 102 048 A1**
(43) Veröffentlichungstag der Anmeldung: **23.05.2001**
(21) Anmeldenummer: 00123611.6
(22) Anmeldetag: 28.10.2000
(51) Int. Cl.: G01K 15/00

(54) **Verfahren zum Kalibrieren eines Temperatursensors**

(30) Priorität: 19.11.1999 DE 19955972
(71) Anmelder: Heraeus Electro-Nite International N.V., 3530 Houthalen (BE)
(72) Erfinder: Baerts, Christiaan, 3580 Beringen-Paal (BE)
(74) Vertreter: Kühn, Hans-Christian

(57) **Zusammenfassung**

Die Erfindung betrifft drei unterschiedliche Verfahren zum Kalibrieren eines Temperatursensors, welcher in der Abgasführung eines Kraftfahrzeuges angeordnet ist. Der vorliegenden Erfindung liegt das Problem zugrunde, verschiedene Verfahren bereitzustellen, die die Verwendbarkeit des Temperatursensors verlängern und die Genauigkeit der Temperaturmessung erhöhen. Das Problem wir durch ein Verfahren dadurch gelöst, daß ein maximales und ein minimales zeitliches Alterungsverhalten eines baugleichen Temperatursensors vorab anhand eines elektrischen Parameters des baugleichen Temperatursensors ermittelt wird und daß das ermittelte Alterungsverhalten in einer Software gespeichert wird und daß damit der in der Abgasführung des Kraftfahrzeuges angeordnete Temperatursensor kalibriert wird.

## Beschreibung

Die Erfindung betrifft drei unterschiedliche Verfahren zum Kalibrieren eines Temperatursensors, welcher in der Abgasführung eines Kraftfahrzeuges angeordnet ist.

Temperatursensoren zur Messung der Abgastemperaturen direkt in der Abgasführung von Kraftfahrzeugen sind bekannt. In dieser Anordnung sind die Sensorelemente der Temperatursensoren extremen Temperaturschwankungen und aggressiven Komponenten im Abgas des Kraftfahrzeuges ausgesetzt, die zu einer Alterung des Sensorelements beziehungsweise zu einer Drift des Sensorsignals führen können. Zu den aggressiven Komponenten zählt beispielsweise Wasserstoff, der durch metallische Sensorgehäuse oder Glasumhüllungen diffundieren kann, die generell zum Schutz von Sensorelementen verwendet werden.

Die DE 37 33 192 beschreibt diese Problematik für PTC-Temperaturfühler. Die Alterung eines PTC-Temperaturfühlerelementes wird hier dadurch vollständig verhindert, daß es zwischen keramischen Folien eingesintert wird und so vom Abgas abgeschirmt wird. Ein Problem taucht bei dieser Anordnung erst auf, wenn beispielsweise aufgrund von Undichtigkeiten dennoch eine Alterung des PTC-Temperaturfühlerelementes auftritt. Eine solche Alterung kann dann nicht detektiert werden und führt zu unerkannten Fehlmessungen.

Aber auch andere Typen von Temperatursensoren sind beim Einsatz in Abgasen von Kraftfahrzeugen alterungsanfällig, wie zum Beispiel NTC-Temperaturfühlerelemente, Metallwiderstandselemente oder Thermoelemente.

Der vorliegenden Erfindung liegt nun das Problem zugrunde, verschiedene Verfahren zum Kalibrieren eines Temperatursensors bereitzustellen, welcher in der Abgasführung eines Kraftfahrzeuges angeordnet ist, die die Verwendbarkeit des Temperatursensors verlängern und die Genauigkeit der Temperaturmessung erhöhen.

Die erfindungsgemäßen Verfahren sind dazu geeignet, die Anwendungszeiten eines tatsächlich alternden Temperatursensorelementes so zu verlängern, daß kein alterungsbedingter Austausch des Temperatursensors während der gesamten Lebenszeit des Kraftfahrzeuges nötig ist. Die Auswahl eines Verfahrens und die Häufigkeit der Anwendung desselben ist allein von der geforderten Meßgenauigkeit im Hinblick auf den gewählten Temperatursensor abhängig.

Das erste erfindungsgemäße Verfahren zum Kalibrieren eines solchen Temperatursensors nutzt den in der Abgasführung angeordneten Katalysator des Kraftfahrzeuges dahingehend, daß ausgehend von einem Kaltstart ein Temperaturverlauf im oder hinter dem Katalysator gemessen wird und dabei ein Temperaturplateau bestimmt wird und der gemessene Temperaturwert des Temperaturplateaus mit einem von einem kalibrierten oder neuen Temperatursensor zuvor gemessenen Wert des Temperatur-Plateaus verglichen wird und die Differenz der Werte zum Kalibrieren des Temperatursensors in der Abgasführung verwendet wird.

Unter einem Kaltstart wird dabei jeder Zustand verstanden, bei welchem sich die Abgasführung des Kraftfahrzeuges im Bereich der Umgebungstemperatur bewegt und ca. +50°C nicht überschreitet.

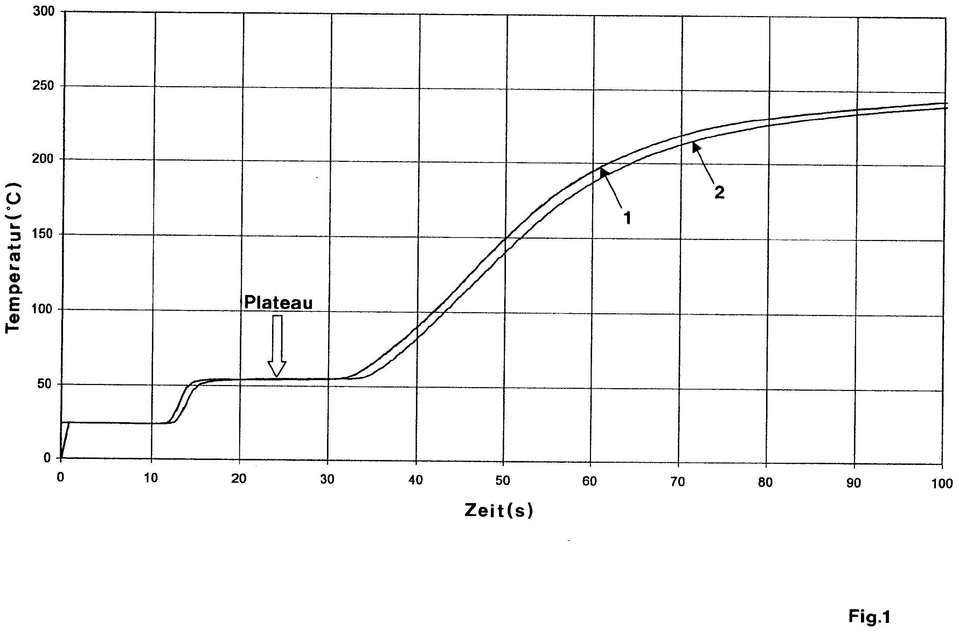

Dieses Verfahren verwendet die Erkenntnis, daß ein Katalysator zur Abgasreinigung oder Stickoxidminderung nach dem Kaltstart einen charakteristischen Temperaturanstieg aufweist, der von einem Plateau, bei dem sich die Temperatur kurzzeitig nicht ändert, begleitet ist ( siehe Fig. 1 ). Das Plateau kennzeichnet einen bestimmten, sich in engen Grenzen immer wieder über einen merklich langen Zeitraum in der gleichen Höhe einstellenden Temperaturwert, der abhängig vom Taupunkt des durch den Katalysator strömenden Abgases und der inneren spezifischen Oberfläche des Katalysators ist. Anders verhält es sich allerdings mit der Länge des Plateaus und damit dem Temperaturunterschied zwischen Abgas und Plateau zu Beginn und vor allem zu Ende des Plateaus. Nur der Temperaturwert des Plateaus ist demzufolge eine nahezu konstante Größe, die zu Vergleichszwecken verwendet werden kann.

Die Ermittlung dieses Temperaturwertes des Plateaus muß je nach Katalysatortyp und Anordnung des Temperatursensors in der Abgasführung getrennt erfolgen und kann mit Hilfe einer separaten Testanordnung oder auch bei den ersten Kaltstarts eines neuen Kraftfahrzeuges, beispielsweise durch eine Mittelwertbildung, festgelegt werden. Die Ermittelung ist um so einfacher, je höher die zu erwärmende Masse des Katalysators vor dem Temperatursensor ist, da sich daraus die Länge des Plateaus ergibt. Der ermittelte Temperaturwert des Plateaus kann dann in einer Software im Kraftfahrzeug fest hinterlegt werden, die in der Lage sein muß, den Zeitpunkt festzustellen, wann sich der ansteigende Temperaturverlauf des Katalysators im Plateau befindet. Zu diesem Zeitpunkt wird der hinterlegte Wert mit dem aktuellen Temperaturmeßwert des zu kalibrierenden Temperatursensors verglichen und die Differenz gebildet. Überoder unterschreitet die Differenz ein je nach Anspruch an die Genauigkeit einer solchen Temperaturmessung wählbares Toleranzfeld, wird der Temperatursensor kalibriert.

Bei dem zweiten erfindungsgemäßen Verfahren zum Kalibrieren eines gattungsgemäßen Temperatursensors mit einem Sensorelement und einem Sensorgehäuse wird mindestens ein weiterer Temperatursensor als Referenzsensor ohne direkten Kontakt zum Abgas und damit vor Alterung geschützt so angeordnet, daß die Temperaturen des zu kalibrierenden Temperatursensors und des Referenzsensors mindestens zu einem einzigen, beliebigen Zeitpunkt nahezu identisch sind und daß dann eine Differenz aus den Temperaturen gebildet wird und diese Differenz zum Kalibrieren des Temperatursensors in der Abgasführung verwendet wird.

Unter "nahezu identisch" ist dabei vorteilhafterweise keine oder eine sehr geringe Abweichung der mit neuen beziehungsweise kalibrierten Temperatursensoren gemessenen beiden Temperaturen im Bereich von ± 1K zu verstehen. Aber auch eine größere Temperaturabweichung zwischen Temperatur- und Referenzsensor zu einem bestimmten Zeitpunkt kann, wenn sie vorher bekannt ist, verwendet und mit Hilfe einer Rechenroutine eliminiert werden.

Ein Zeitpunkt, zu dem die Temperaturen verglichen werden können, kann beispielsweise direkt nach dem Motorstart gewählt werden, bei dem sich alle Teile des Kraftfahrzeuges auf Umgebungstemperatur befinden. Es ist aber auch möglich, die Vergleichsmessung während des Motorbetriebes zu einem bestimmten Zeitpunkt nach Abstellen des Fahrzeuges durchzuführen.

Befinden sich Temperatur- und Referenzsensor zu einem bestimmten Zeitpunkt erfahrungsgemäß immer auf einem gleichen Temperaturniveau, dann stellt eine eventuell meßbare Differenz zwischen den Temperatursignalen ein direktes Maß für die Alterung des Temperatursensors dar. Über- oder unterschreitet die Differenz ein je nach Anspruch an die Genauigkeit einer solchen Temperaturmessung wählbares Toleranzfeld, wird der Temperatursensor kalibriert. Bewegt sich die Differenz jedoch innerhalb des Toleranzfeldes, so kann die Kalibrierung noch unterbleiben.

Befinden sich Temperatur- und Referenzsensor zu einem bestimmten Zeitpunkt erfahrungsgemäß immer auf zwei unterschiedlichen Temperaturniveaus, aber mit einer konstanten Abweichung der Niveaus voneinander, dann ist die meßbare Differenz zwischen den Temperatursignalen nur dann für die Alterung des Temperatursensors bezeichnend, wenn die Differenz die konstante Abweichung plus ein Toleranzfeld überschreitet oder die Differenz die konstante Abweichung minus ein Toleranzfeld unterschreitet.

Der Referenzsensor kann an verschiedensten Orten im oder am Kraftfahrzeug angeordnet werden. Vorteilhaft ist eine Anordnung im Sensorgehäuse des zu kalibrierenden Temperatursensors oder in einer elektrischen Anschlußeinheit oder nahe der elektrischen Anschlußeinheit des zu kalibrierenden Temperatursensors. Der Referenzsensor kann auch so am Kraftfahrzeug angeordnet werden, daß er gleichzeitig als ein Außenluft-Temperatursensor dient. Ebenso ist eine Anordnung des Referenzsensors im Kraftfahrzeug vorteilhaft, bei welcher er gleichzeitig als ein Fahrgastzellenluft-Temperatursensor dienen kann.

Eine Anordnung des Referenzsensors in einem mit Flüssigkeit gefüllten Raum im Kraftfahrzeug, beispielsweise im Kühlwasser oder im Motoröl, sind ebenfalls denkbar.

Dieses zweite Verfahren liefert im Vergleich zu den beiden anderen vorgestellten Kalibrierverfahren die genauesten Kalibrierergebnisse.

Bei dem dritten erfindungsgemäßen Verfahren zum Kalibrieren eines gattungsgemäßen Temperatursensors mit einem Sensorelement wird ein maximales und ein minimales zeitliches Alterungsverhalten eines baugleichen Temperatursensors vorab anhand eines elektrischen Parameters des baugleichen Temperatursensors ermittelt und das ermittelte Alterungsverhalten in einer Software gespeichert und damit der in der Abgasführung des Kraftfahrzeuges angeordnete Temperatursensor kalibriert.

Zu diesem Verfahren ist eine große Anzahl an Vorversuchen zu dem gewünschen Temperatursensorelement notwendig. Dabei werden Testbedingungen ( Abgaszusammensetzung, Temperatur und so weiter ), die das Sensorelement zum einen minimal und zum anderen maximal belasten, gewählt, um den minimalen und den maximalen zeitlichen Alterungsverlauf des Sensorelementes zu bestimmen. Je enger der minimale und der maximale zeitliche Alterungsverlauf beisammen liegen, desto genauer kann später der Temperatursensor in der Abgasführung des Kraftfahrzeuges kalibriert werden.

Der Temperatursensor kann als Widerstandstemperatursensor ausgebildet sein und als elektrischer Parameter sein Widerstand verwendet werden. Das Sensorelement des Widerstandstemperatursensors kann als Metallwiderstand oder als NTC - Widerstand oder als PTC - Widerstand ausgebildet werden, wobei als Metallwiderstand vorteilhafterweise ein Platinwiderstand verwendet wird.

Es ist aber auch möglich, den Temperatursensor als Thermoelement auszubilden und als elektrischen Parameter die Thermospannung zu verwenden.

Nachfolgend sollen die unterschiedlichen Verfahren anhand der Figuren 1 bis 4 beispielhaft näher erläutert werden. So zeigt
- Fig. 1: Temperaturverlauf eines Katalysators in der Abgasführung eines Kraftfahrzeuges nach einem Kaltstart
- Fig. 2: Anordnung mit einem vor Alterung geschützten Temperatursensorelement
- Fig. 3: Diagramm mit gemessenen Temperaturen gemäß einer Meßanordnung der Fig. 2
- Fig. 4: Diagramm zur Vorhersage der Temperaturdrift eines Temperatursensorelementes in der Abgasführung eines Kraftfahrzeuges

Fig. 1 zeigt den Temperaturverlauf eines Katalysators in der Abgasführung eines Kraftfahrzeuges, der zur Durchführung des Verfahrens nach Anspruch 1 verwendet werden kann. Der Temperaturverlauf ist abhängig von der Bauart des Katalysators und der Anordnung des Temperatursensors im oder am Katalysator und somit nur im Prinzip auf andere Systeme übertragbar. Die Kurven 1 und 2 zeigen den Temperaturverlauf des Katalysators während zwei Kaltstarts des Kraftfahrzeuges, die nacheinander aufgenommen wurden. Nach einem raschen Temperaturanstieg auf ca. 50°C ist jeweils ein Plateau zu erkennen, bei welchem die Temperatur über mehrere Sekunden, in diesem Beispiel über etwa 15 Sekunden, gleich bleibt. Die Höhe des Plateaus ist abhängig vom Taupunkt des durch den Katalysator strömenden Abgases und kann als nahezu konstante Größe zur Kalibierung irgendeines Temperatursensors im Kraftfahrzeug verwendet werden.

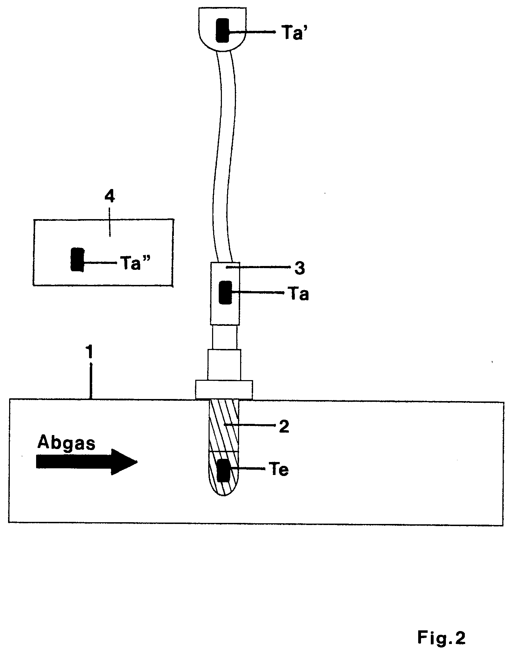

Fig. 2 zeigt eine beziehungsweise mehrere beispielhafte Meßanordnungen mit Temperatursensoren, die zur Durchführung des Verfahrens nach Anspruch 2 verwendet werden können. In der Abgasführung 1 eines Kraftfahrzeuges strömt Abgas mit einer Temperatur Te. In der Abgasführung befindet sich ein Temperatursensorelement 2 mit Sensorgehäuse, welches die Temperatur Te des Abgases bestimmt. Außerhalb der Abgasführung 1 befindet sich im oder am Kraftfahrzeug die elektrische Anschlußeinheit 3 für das Temperatursensorelement 2. Ein weiteres Temperatursensorelement kann nun außerhalb der Abgasführung 1 - vor Alterung durch das Abgas geschützt - angeordnet werden. So kann beispielsweise außerhalb der Abgasführung 1 eine Temperatur Ta an der elektrischen Anschlußeinheit 3 in Nähe der Abgasführung 1 erfasst werden oder es wird in etwas größerem Abstand zur Abgasführung 1 die Temperatur Ta' erfasst. Es kann aber auch eine Temperatur Ta" beispielsweise im Kühlwasserbehälter 4 des Kraftfahrzeuges erfasst werden.

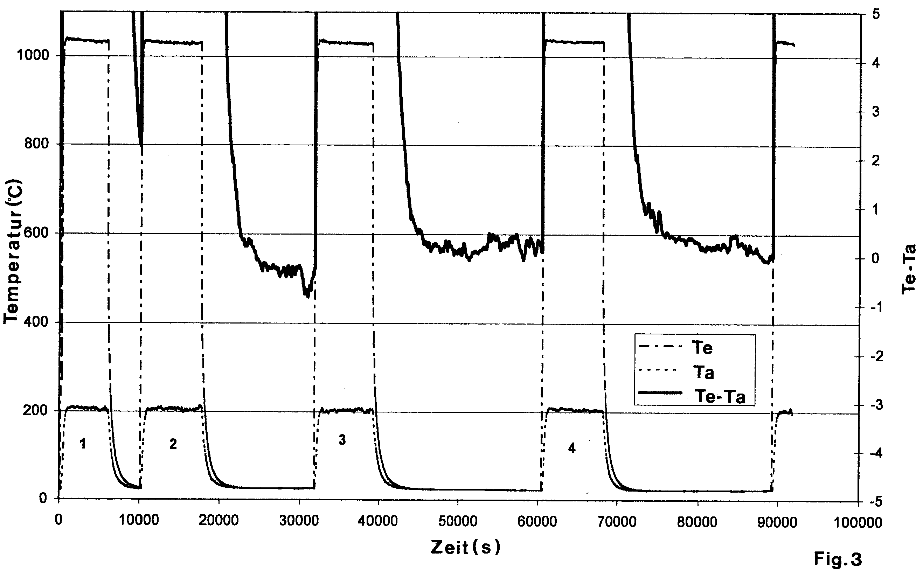

Fig. 3 zeigt beispielhaft die Meßergebnisse einer Anordnung gemäß Fig. 2, in der die Temperaturen Te und Ta gemessen werden. Es wurden vier Motorstarts ( Ziffern 1 - 4 ) durchgeführt, das Kraftfahrzeug jeweils über einen bestimmten Zeitraum betrieben und schließlich abgestellt. Die in der Abgasführung gemessene Temperatur Te wird durch Differenzbildung mit der außerhalb der Abgasführung gemessenen Temperatur Ta zu einem Wert Te-Ta verrechnet und dieser Wert Te-Ta für das abgestellte Kraftfahrzeug betrachtet. Der Wert Te-Ta stellt ein Maß für die Alterung des Temperatursensorelementes in der Abgasführung dar und ist je nach Anforderungen an die Meßgenauigkeit dieses Sensorelementes zu dessen Kalibrierung verwendbar. Kann beispielsweise eine Temperaturdifferenz von ± 1 K toleriert werden, so bestimmt eine Rechenelektronik zuerst, ob der gemessene Wert Te-Ta innerhalb oder außerhalb des Toleranzfeldes liegt. Ist der Betrag des Wertes Te-Ta in diesem Fall kleiner eins, so ist die Temperaturdifferenz zwischen den beiden Temperatursensorelementen kleiner 1K und eine Kalibrierung noch nicht erforderlich. Ist der Betrag des Wertes Te-Ta jedoch größer eins, so wird das Temperatursensorelement im Abgas mit dem Wert Te-Ta kalibriert, d.h. um den Wert Te-Ta an den gemessenen Temperaturwert Ta des außerhalb des Abgases angeordneten Temperatursensorelementes angeglichen. Eine solche rechnerische Behandlung von Meßwerten fällt in den Rahmen fachmännischen Handelns.

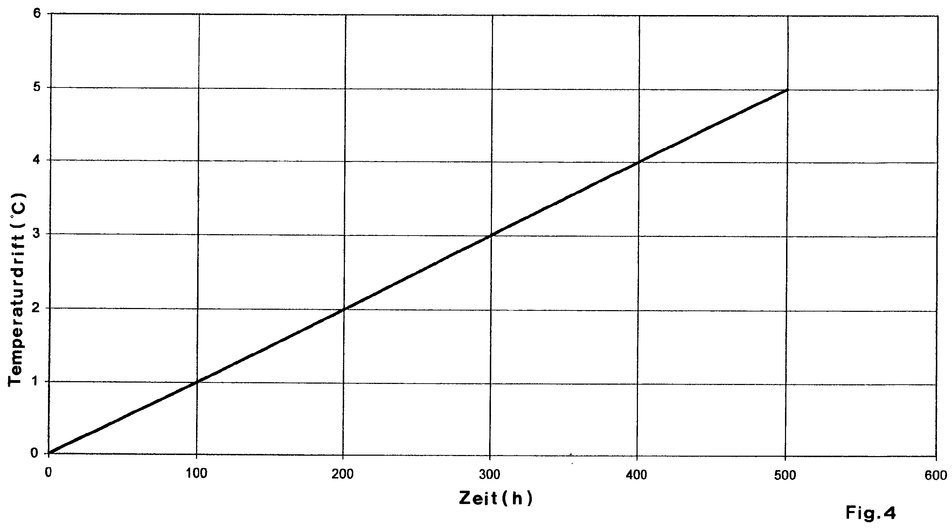

Fig. 4 zeigt die Vorhersage einer mittleren Temperaturdrift ( in °C ) eines in der Abgasführung eines Kraftfahrzeuges angeordneten Temperatursensor mit einem Platinwiderstandselement als Sensorelement über eine Betriebsdauer von 500h. Unter der Temperaturdrift ist die Differenz zwischen gemessenem Temperaturwert und der tatsächlich vorherschender Temperatur zu verstehen. Die mittlere Temperaturdrift bezeichnet eine mittlere Alterung zwischen üblicher maximaler und minimaler Alterung des Sensorelementes. Bei dem Temperatursensor mit Platinwiderstandselement als Sensorelement ist ein Fehlmessung meist auf die Zunahme des elektrischen Widerstandes des Platinwiderstandselementes durch Alterung zurückzuführen. Im Prinzip kann eine wie in Fig. 4 gezeigte Kurve für einen jeden Temperatursensortyp vorab anhand von Langzeittests ermittelt werden und dann in einer Elektronik an Bord des Kraftfahrzeuges hinterlegt und zur Kalibrierung des eines solchen Temperatursensors verwendet werden.

## Patentansprüche

1. Verfahren zum Kalibrieren eines Temperatursensors, welcher in der Abgasführung eines Kraftfahrzeuges angeordnet ist, das einen Katalysator aufweist, dadurch gekennzeichnet, daß ausgehend von einem Kaltstart ein Temperaturverlauf im oder hinter dem Katalysator gemessen wird und dabei ein Temperaturplateau bestimmt wird und der gemessene Temperaturwert des Temperaturplateaus mit einem von einem kalibrierten oder neuen Temperatursensor zuvor gemessenen Wert des Temperatur-Plateaus verglichen wird und die Differenz der Werte zum Kalibrieren des Temperatursensors in der Abgasführung verwendet wird.

2. Verfahren zum Kalibrieren eines Temperatursensors mit einem Sensorelement und einem Sensorgehäuse, welcher in der Abgasführung eines Kraftfahrzeuges angeordnet ist, dadurch gekennzeichnet, daß mindestens ein weiterer Temperatursensor als Referenzsensor ohne direkten Kontakt zum Abgas und damit vor Alterung geschützt so angeordnet ist, daß die Temperaturen des zu kalibrierenden Temperatursensors und des Referenzsensors mindestens zu einem einzigen, beliebigen Zeitpunkt nahezu identisch sind und daß dann eine Differenz aus den Temperaturen gebildet wird und diese Differenz zum Kalibrieren des Temperatursensors in der Abgasführung verwendet wird.

3. Verfahren nach Anspruch 2, dadurch gekennzeichnet, daß der Referenzsensor im Sensorgehäuse des zu kalibrierenden Temperatursensors angeordnet wird.

4. Verfahren nach Anspruch 2, dadurch gekennzeichnet, daß der Referenzsensor in einer elektrischen Anschlußeinheit oder nahe der elektrischen Anschlußeinheit des zu kalibrierenden Temperatursensors angeordnet wird.

5. Verfahren nach Anspruch 2, dadurch gekennzeichnet, daß der Referenzsensor so am Kraftfahrzeug angeordnet wird, daß er gleichzeitig als ein Außenluft-Temperatursensor dient.

6. Verfahren nach Anspruch 2, dadurch gekennzeichnet, daß der Referenzsensor so im Kraftfahrzeug angeordnet wird, daß er gleichzeitig als ein Fahrgastzellenluft-Temperatursensor dient.

7. Verfahren nach Anspruch 2, dadurch gekennzeichnet, daß der Referenzsensor in einem mit Flüssigkeit gefüllten Raum im Kraftfahrzeug angeordnet wird.

8. Verfahren nach Anspruch 7, dadurch gekennzeichnet, daß der Referenzsensor im Kühlwasser des Kraftfahrzeuges angeordnet wird.

9. Verfahren nach Anspruch 7, dadurch gekennzeichnet, daß der Referenzsensor im Motoröl des Kraftfahrzeuges angeordnet wird.

10. Verfahren zum Kalibrieren eines Temperatursensors mit einem Sensorelement, welcher in der Abgasführung eines Kraftfahrzeuges angeordnet ist, dadurch gekennzeichnet, daß ein maximales und ein minimales zeitliches Alterungsverhalten eines baugleichen Temperatursensors vorab anhand eines elektrischen Parameters des baugleichen Temperatursensors ermittelt wird und daß das ermittelte Alterungsverhalten in einer Software gespeichert wird und daß damit der in der Abgasführung des Kraftfahrzeuges angeordnete Temperatursensor kalibriert wird.

11. Verfahren nach Anspruch 10, dadurch gekennzeichnet, daß der Temperatursensor als Widerstandstemperatursensor ausgebildet ist und als elektrischer Parameter sein Widerstand verwendet wird.

12. Verfahren nach Anspruch 11, dadurch gekennzeichnet, daß das Sensorelement des Widerstandstemperatursensor als Metallwiderstand oder als NTC - Widerstand oder als PTC-Widerstand ausgebildet wird.

13. Verfahren nach Anspruch 12, dadurch gekennzeichnet, daß als Metallwiderstand ein Platinwiderstand verwendet wird.

14. Verfahren nach Anspruch 10, dadurch gekennzeichnet, daß der Temperatursensor als Thermoelement ausgebildet wird und als elektrischer Parameter die Thermospannung verwendet wird.
